# EUROPÄISCHE PATENTANMELDUNG

(11) **EP 2 840 270 A1**
(43) Veröffentlichungstag der Anmeldung: **25.02.2015**
(21) Anmeldenummer: 14175494.5
(22) Anmeldetag: 03.07.2014
(51) Int. Cl.: F16C 33/66, F16C 33/46

(54) **Lagerkäfig für verlängerte Fettgebrauchsdauer**

(30) Priorität: 03.07.2013 DE 102013212962
(71) Anmelder: Aktiebolaget SKF, 41 550 Göteborg (SE)
(72) Erfinder: Gruell, Robert, 97528 Sulzdorf (DE); Lugt, Pieter Martin, 4132 BB Vianen (NL)
(74) Vertreter: Kuhstrebe, Jochen

(57) **Zusammenfassung**

Ausfiihrungsbeispiele betreffen einen Lagerkäfig (10) zum Führen von Rollen (16) eines Wälzlagers, wobei in dem Lagerkäfig eine Mehrzahl von Wälzkörpertaschen (12) ausgebildet ist, wobei eine Wälzkörpertasche eine Rolle aufnehmen kann und durch zwei axial verlaufende Käfigstege (13) begrenzt wird, dadurch gekennzeichnet, dass ein Verhältnis zwischen einer Stärke (D₁₃) eines Käfigstegs auf dem Lagerteilkreis zum Durchmesser (D₁₂) einer Wälzkörpertasche in einem Bereich zwischen 0.3 und 0.8 liegt.

## Beschreibung

Ausführungsbeispiele der vorliegenden Erfindung betreffen im Allgemeinen Lagerkäfige für Wälzlager und insbesondere Lagerkäfige, die eine verlängerte Fettgebrauchsdauer bei Wälzlagern, wie z. B. Rollenlagern, ermöglichen.

Lagerkäfige für Wälzlager bestehen im Allgemeinen aus zwei in einem axialen Abstand angeordneten Seitenringen und diese Seitenringe verbindenden, in einer Umfangsrichtung des Lagerkäfigs hintereinander angeordneten Käfigstegen, welche paarweise Taschen zur Aufnahme von Wälzkörpern, insbesondere Rollen oder Nadeln, bilden. Ein Lagerkäfig hält die Wälzkörper mittels der dafür vorgesehenen Wälzkörpertaschen auf Abstand zueinander und verhindert eine unmittelbare Berührung benachbarter Wälzkörper, was Reibung und damit Wärmeentwicklung im Lager typischerweise verringert. Er sorgt außerdem für eine gleichmäßige Verteilung der Wälzkörper über einen gesamten Umfang des Käfigs bzw. Wälzlagers und ermöglicht so eine gleichmäßige Lastverteilung sowie einen ruhigen und gleichmäßigen Lauf.

Wie lange ein fettgeschmiertes Wälzlager ohne Nachschmierung laufen kann, hängt von der Lagerart und -größe, der Fettqualität, der Drehzahl, der Betriebstemperatur des Lagers, den Umgebungseinflüssen und der Abdichtung des Wälzlagers ab. Bei kleinen Lagern kann die Gebrauchsdauer des Schmiermittels, d.h. die Fettgebrauchsdauer, derart lang sein, dass eine Nachschmierung nicht erforderlich ist. Als Fettgebrauchsdauer wird üblicherweise die Zeit vom Anlauf bis zum Ausfall eines Lagers als Folge eines Versagens der Schmierung bezeichnet. Die Fettgebrauchsdauer hängt dabei typischerweise ab von der Fettmenge, Fettart, Lagerbauart und -größe, Höhe und Art der Belastung, Drehzahlkennwert, Lagertemperatur, Einbauverhältnissen, etc.

Bei fettgeschmierten Wälzlageranwendungen, in denen Kugel- und Rollenlager verwendet werden, z. B. bei Generatoren und großen Elektro-Motoren, wie sie z.B. bei Windkraftanlagen zum Einsatz kommen, ist die Fettgebrauchsdauer bei Kugellagern ungefähr doppelt so lang wie bei Rollenlagern. Daraus resultierend ist es erforderlich, entweder unterschiedliche Fette für Kugel- und Rollenlager zu verwenden oder bei Verwendung nur eines Fettes, die Nachschmierfristen von Rollenlagern gegenüber Kugellagern zu halbieren, d. h. die für Rollenlager empfohlenen Intervalle einzuhalten.

Eine Aufgabe der vorliegenden Erfindung besteht somit darin, insbesondere für große Wälz- bzw. Rollenlager, die Fettgebrauchsdauer gegenüber herkömmlichen Lagern zu erhöhen bzw. deren Nachschmierintervalle zu verlängern.

Diese Aufgabe wird gelöst durch einen Lagerkäfig und ein Verfahren mit den Merkmalen gemäß den unabhängigen Patentansprüchen.

Gemäß einem Kerngedanken der vorliegenden Erfindung, kann durch eine Verringerung der Rollenanzahl und eine Verbreiterung der Käfigstege bei einem Wälzlager der freie Raum im Lager gegenüber herkömmlichen Wälzlagern vergrößert und somit als zusätzliches Fettreservoir genutzt werden. Gemäß Ausführungsbeispielen wird dazu ein Lagerkäfig vorgeschlagen mit gegenüber herkömmlichen Lagerkäfigen im Bereich bzw. auf Höhe des Lagerteilkreises verbreiteten Käfigstegen. Dadurch ergibt sich gegenüber herkömmlichen Wälzlagern mit demselben Teilkreisdurmesser eine Verringerung der Rollenanzahl. Die sich dadurch ergebenden größeren Zwischenräume zwischen den einzelnen Rollen können als zusätzliches Fettreservoir genutzt werden und somit zu einer erhöhten Fettgebrauchsdauer führen. Die Verbreiterung der Käfigstege kann über das Verhältnis von Stegstärke zu Taschendurchmesser definiert werden, wobei ein herkömmliches Verhältnis eines herkömmlichen Lagers bzw. Käfigs mit einem Faktor zwischen 1,4 und 2,6, je nach Lagerreihe, multipliziert wird, um zu einem erfindungsgemäßen Lager bzw. Lagerkäfig zu gelangen.

Absoluter ausgedrückt bedeutet das, dass manche Ausführungsbeispiele der vorliegenden Erfindung einen Lagerkäfig zum Führen von Rollen eines Wälzlagers vorsehen, wobei in dem Lagerkäfig eine Mehrzahl von Wälzkörper- bzw. Rollentaschen ausgebildet ist, wobei eine Wälzkörpertasche eine Rolle aufnehmen kann und durch zwei axial verlaufende Käfigstege begrenzt wird. Gemäß Ausführungsbeispielen ist der Lagerkäfig durch ein Verhältnis zwischen einer Käfigstegstärke auf dem Lagerteilkreis zum Rollen- oder Taschendurchmesser in einem Bereich zwischen 0.3 und 0.8, insbesondere zwischen 0.35 bis 0.77, gekennzeichnet. Dabei wird der Lagerteilkreis definiert durch einen Lagerteilkreisradius, der sich von der Lagerrotationsachse bis zu einer Symmetrieachse eines auf einer Laufbahn des Lagers rotierenden Wälzkörpers erstreckt. Dementsprechend ist der Lagerteilkreisdurchmesser definiert als die Strecke zwischen zwei im 180° Winkel gegenüberliegenden und auf der Laufbahn abrollenden Wälzkörpern bzw. deren Symmetrieachsen.

Durch zahlreiche Versuche haben die Erfinder herausgefunden, dass ein rollengeführter Messingkäfig die längste Fettgebrauchsdauer ergibt. Daher ist der Lagerkäfig gemäß einem Ausführungsbeispiel der vorliegenden Erfindung vorzugsweise aus Messing gefertigt. Der Teilkreisdurchmesser liegt bei Ausführungsbeispielen vorzugsweise über 100 mm, so dass es sich um einen Lagerkäfig für mittlere bis große Wälzlagergrößen, insbesondere für große Industriegetriebe, Motoren, Generatoren u.ä., handelt.

Der Nachteil, dass durch die Verringerung der Rollenanzahl gegenüber herkömmlichen Lagern auch die statische und dynamische Tragzahl des Lagers verloren geht, ist vernachlässigbar, da bei Anwendungen, wie z. B. bei Generatoren und großen E-Motoren, die Tragzahl nur eine vergleichsweise untergeordnete Rolle spielt bzw. die Lager nur leicht belastet sind. Dafür kann durch die Verringerung der Rollenanzahl und die Verbreiterung der Käfigstege die ursprüngliche bzw. herkömmliche Fettmenge im Lager bei gleichem Lagerteilkreisdurchmesser erhöht werden.

Des Weiteren können am Innendurchmesser der Käfigstege Ausnehmungen bzw. Ausfräsungen mit hohen Rauheitswerten Rₐ, vorzugsweise Rₐ > 3,2 µm, angebracht sein, um das Schmiermittel bzw. Fett während des Betriebs besser an den Käfigstegen zu halten. Die Ausnehmungen, welche auch als linienartige Riefen oder Rinnen ausgebildet sein können, verlaufen gemäß manchen Ausführungsbeispielen vorzugsweise in axialer Richtung. Dabei können die Abmessungen der Ausnehmungen vorzugsweise 50 bis 90 % der Stegbreite (in Umfangsrichtung) und 80 bis 100 % der Käfigsteglänge (in axialer Richtung) betragen.

Die erwähnten Vertiefungen zum Aufnehmen von Schmiermittel an den radial innenliegenden Oberflächen der Käfigstege, können gemäß manchen Ausführungsbeispielen des Lagerkäfigs mit dem Verhältnis zwischen der Käfigstegstärke zum Rollen- oder Taschendurchmesser im Bereich zwischen 0.3 und 0.8 kombiniert werden.

Gemäß einem weiteren Aspekt sehen Ausführungsbeispiele der vorliegenden Erfindung aber auch Lagerkäfige vor, die zwar ein anderes Verhältnis zwischen Käfigstegstärke und Rollendurchmesser aufweisen, aber trotzdem wenigstens einer der Käfigstege an seiner radial innenliegenden Oberfläche wenigstens eine Vertiefung zum Aufnehmen von Schmiermittel aufweist, wobei die wenigstens eine Vertiefung die oben bereits erwähnten Merkmale umfasst.

Durch die Ausnehmungen bzw. Ausfräsungen am Innendurchmesser der Käfigstege kann Schmiermittel bzw. Fett besser unter den Stegen gehalten und im Betrieb langsam an den Wälzkontakt zur Schmierung abgegeben werden. Durch die höhere Fettmenge und das durch die Ausfräsungen bedingte langsame Ausbluten des Fetts, kann die Fettgebrauchsdauer erhöht und die Nachschmierfrist verlängert werden. D. h., ein Vorteil der vorliegenden Erfindung ist in dem geringeren Fettverbrauch und der längeren Nachschmierfrist, d. h. den sich dadurch ergebenden effektiven Laufzeiten, zu sehen.

Weiterhin kann vorgesehen sein, dass einer der im vorhergehenden beschriebenen Lagerkäfige zwei Seitenringe aufweist, zwischen denen die Käfigstege in axialer Richtung verlaufen und wobei ein Innendurchmesser eines Seitenrings an seinem axial äußeren Bereich kleiner ist, als sein Innendurchmesser an seinem axial inneren (den Käfigstegen zugewandten) Bereich. In anderen Worten ausgedrückt, können die Seitenringe eines Käfigs am Innendurchmesser derart ausgeführt sein, dass der Innendurchmesser eines Seitenrings am Käfigsteg größer ist, als an der äußeren Seitenfläche des Seitenrings, um eine Fettverdrängung nach außen, d. h. vom Wälzkörper wegwärts, zu erschweren. Beim Außendurchmesser kann es sich genau umgekehrt verhalten, d.h. der Außendurchmesser eines Seitenrings kann an seinem axial äußeren Bereich größer sein, als sein Außendurchmesser an seinem axial inneren (den Käfigstegen zugewandten) Bereich. Durch Fliehkräfte aufgrund einer Rotation des Käfigs, kann das Fett entlang dieser kegelig schrägen Seitenringinnenflächen zum Wälzkörper hin geführt werden. Gemäß Ausführungsbeispielen kann der Kegelwinkel in einem Bereich von 3° bis 10° liegen. Anders ausgedrückt, kann eine radiale Endfläche des Seitenrings mit der Rotationsachse des Lagerkäfigs einen Winkel α in einem Bereich von 3° bis 10° einschließen.

Während das zuletzt beschriebene Merkmal auch in Kombination mit sämtlichen davor beschriebenen Merkmalen zum Einsatz kommen kann, sehen manche Aspekte der vorliegenden Erfindung auch Lagerkäfige vor, bei denen dieses Merkmal ohne die vorher beschriebenen Merkmale auftritt. Gemäß einem weiteren Aspekt der vorliegenden Erfindung ist also auch ein Lagerkäfig vorgesehen, der zwei Seitenringe aufweist, zwischen denen die Käfigstege in axialer Richtung verlaufen und wobei ein Innen-/Außendurchmesser eines Seitenrings an seinem axial äußeren Bereich kleiner/größer ist als sein Innen- /Außendurchmesser an seinem axial inneren Bereich. Dadurch kann die Fettverdrängung nach axial außen, d.h. von den Rollen weg, erschwert werden.

Zudem sehen Ausführungsbeispiele auch ein Verfahren zum Herstellen eines Lagerkäfigs vor, mit einem Schritt des Ausbildens, in dem Lagerkäfig, einer Mehrzahl von Rollentaschen, wobei eine Rollentasche eine Rolle aufnehmen kann und durch zwei axial verlaufende Käfigstege begrenzt wird, und derart gebildet wird, dass ein Verhältnis zwischen einer Stärke (in tangentialer Richtung) eines Käfigstegs auf dem Lagerteilkreis zum Durchmesser (in tangentialer Richtung) einer Rollentasche in einem Bereich zwischen 0.3 und 0.8 liegt.

Einige exemplarische Ausführungsbeispiele der vorliegenden Erfindung werden nun nachfolgend bezugnehmend auf die beiliegenden Figuren näher erläutert. Es zeigen:
- Fig. 1: eine perspektivische Darstellung eines Lagerkäfigs gemäß einem Ausführungsbeispiel der vorliegenden Erfindung;
- Fig. 2: eine Seitenansicht eines Segments des Lagerkäfigs gemäß Fig. 1;
- Fig. 3a: eine perspektivische Darstellung eines Käfigstegs mit wenigstens einer an seiner radial innenliegenden Oberfläche eingeformten Vertiefung zum Aufnehmen von Schmiermittel;
- Fig. 3b: eine perspektivische Darstellung eines Segments eines Lagerkäfigs mit darin geführten Rollen gemäß einem Ausführungsbeispiel,
- Fig. 3c: eine schematische Seitenansicht (Schnitt im Käfigsteg) des Lagerkäfigs gemäß Fig. 3b;
- Fig. 4a: eine schematische Darstellung eines Wälzlagers mit einem Lagerkäfig gemäß einem Ausführungsbeispiel der vorliegenden Erfindung; und
- Fig. 4b: Schnittansicht vom Käfig mit angeschrägten radialen Innenseiten gemäß einem Ausführungsbeispiel.

In der nachfolgenden Beschreibung einzelner exemplarischer Ausführungsbeispiele anhand der Figuren, können gleiche Bezugszeichen gleiche oder funktional ähnliche Bauteile bzw. -elemente bezeichnen.

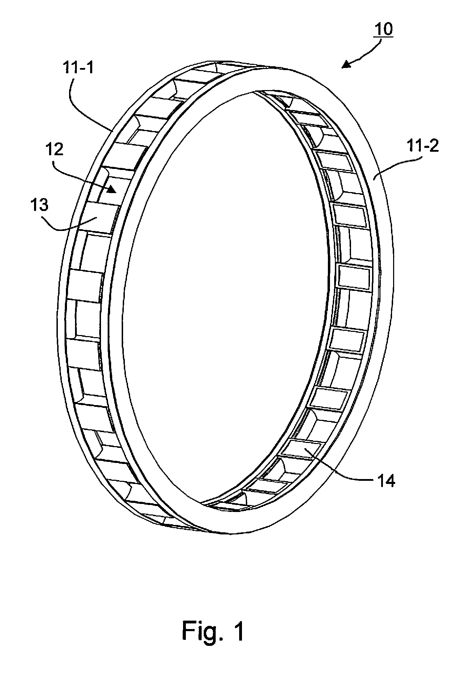

Die Fig. 1 zeigt in perspektivischer Darstellung einen Lagerkäfig 10 gemäß einem Ausführungsbeispiel, wobei der Lagerkäfig 10 gegenüber einem herkömmlichen Lagerkäfig mit gleichem Teilkreisdurchmesser eine reduzierte Rollenanzahl aufweist. Vorzugsweise kann der Lagerkäfig 10 aus Messing gefertigt sein.

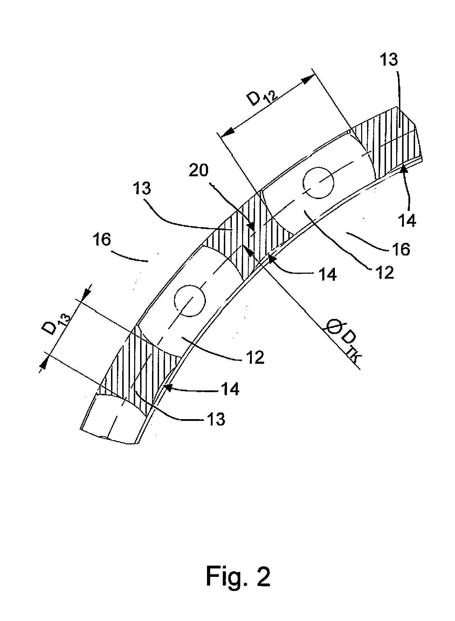

Der Lagerkäfig 10 dient also zum Führen einer reduzierten Anzahl von Rollen (nicht gezeigt) eines Wälzlagers. Dazu weist der Lagerkäfig 10 einen ersten und einen zweiten Seitenring 11-1 und 11-2 auf. Zwischen den beiden Seitenringen 11-1 und 11-2 erstrecken sich in axialer Richtung eine Mehrzahl von Käfigstegen 13, die paarweise Wälzkörper- bzw. Rollentaschen 12 zur Aufnahme von Wälzkörpern, insbesondere Rollen, bilden. Eine Tasche 12 kann also eine Rolle aufnehmen und wird durch die beiden Seitenringe 11-1, 11-2 und zwei benachbarte axial dazwischen verlaufende Käfigstege 13 begrenzt. Der Lagerkäfig 10 ist gemäß Ausführungsbeispielen der vorliegenden Erfindung vor allem dadurch gekennzeichnet, dass ein Verhältnis zwischen der Käfigstegstärke 13 auf dem Lagerteilkreis zum Rollen- oder Taschendurchmesser in einem Bereich zwischen 0.3 und 0.8 liegt, je nach Lagerbauart (Breiten-Durchmesser-Reihe). Insbesondere kann das Verhältnis zwischen 0.5 und 0.8 oder, bei manchen Ausführungsbeispielen, zwischen 0.35 und 0.77 liegen. Dabei kann der Teilkreisdurchmesser größer als 100 mm sein. Diese Größenverhältnisse sind in der Fig. 2 in einer Seitenansicht dargestellt.

Die Fig. 2 zeigt eine Seitenansicht eines Segments des Lagerkäfigs 10 mit beispielhaft drei in Umfangsrichtung nebeneinander angeordneten Käfigstegen 13. Durch die drei Käfigstege 13 und die beiden in Umfangsrichtung verlaufenden Seitenringe 11-1 und 11-2 werden zwei Wälzkörpertaschen 12 gebildet. Die Fig. 2 zeigt ferner den sich durch die Käfig- und/oder Lagergeometrie ergebenden Lagerteilkreis 20, welcher durch die Symmetrieachsen der schematisch angedeuteten Rollen 16 verläuft. Die Rollentaschen 12 weisen einen Durchmesser D₁₂ auf, der im Wesentliche auch dem Rollendurchmesser D₁₆ entspricht. Die zwischen den Taschen 12 befindlichen axial verlaufenden Stege 13 weisen in Umfangsrichtung auf Höhe des Teilkreises 20 (d.h. in Entfernung zur Rotationsachse entsprechend dem Teilkreisradius) eine Stegbreite D₁₃ auf. Bei Ausführungsbeispielen liegt das Verhältnis zwischen der Stegstärke D₁₃ auf dem Lagerteilkreis 20 zum Rollen- bzw. Taschendurchmesser D₁₂ (bzw. D₁₆) in einem Bereich zwischen 0.3 und 0.8. Insbesondere liegt das Verhältnis D₁₃/ D₁₂ zwischen 0.35 und 0.77.

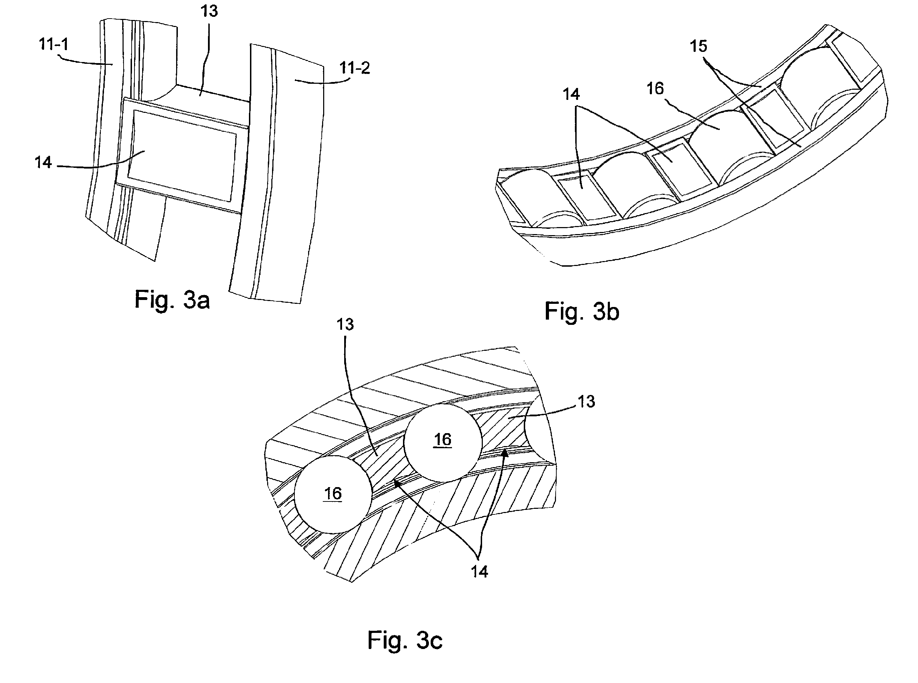

In der Fig. 2 lässt sich ebenfalls erkennen, dass die Käfigstege 13 an ihrer radial innenliegenden Oberfläche jeweils eine Vertiefung 14 zum Aufnehmen von Schmiermittel bzw. Fett aufweisen. Diese Vertiefungen 14 sind in anderer Darstellung auch in den Figuren 3a, 3b und 3c gezeigt. Die Vertiefungen 14 können gemäß Ausführungsbeispielen durch Ausfräsungen mit hohen Rauheitswerten Rₐ, vorzugsweise Rₐ > 3,2 µm, gebildet sein. Durch die Vertiefungen 14 kann das im Lager befindliche Fett- bzw. Schmiermittel, insbesondere während des Betriebs, besser im Bereich der Käfigstege 13 gehalten werden.

Gemäß manchen Ausführungsbeispielen ist eine Haupterstreckungsrichtung der Vertiefungen bzw. der Bearbeitungsriefen 14 die axiale Richtung. Das bedeutet, dass sich die Vertiefungen 14 in axialer Richtung weiter erstrecken als in tangentialer Richtung bzw. Umfangsrichtung. Bei Ausführungsbeispielen liegen die Abmessungen der Vertiefungen 14 vorzugsweise in einem Bereich von 50% bis 90% der Stegbreite (Umfangsrichtung) und 80% bis 100% der Steglänge (axiale Richtung). Dem Fachmann wird einleuchten, dass die Vertiefungen 14 an den radial innenliegenden Seiten der Stege 13 auch anders als hier beschrieben ausgeführt sein können. Beispielsweise kann es sich bei den Vertiefungen 14 auch um eine Mehrzahl von in Umfangsrichtung nebeneinander linienartig in axialer Richtung verlaufenden Rinnen handeln, um Schmiermittel darin anzusammeln.

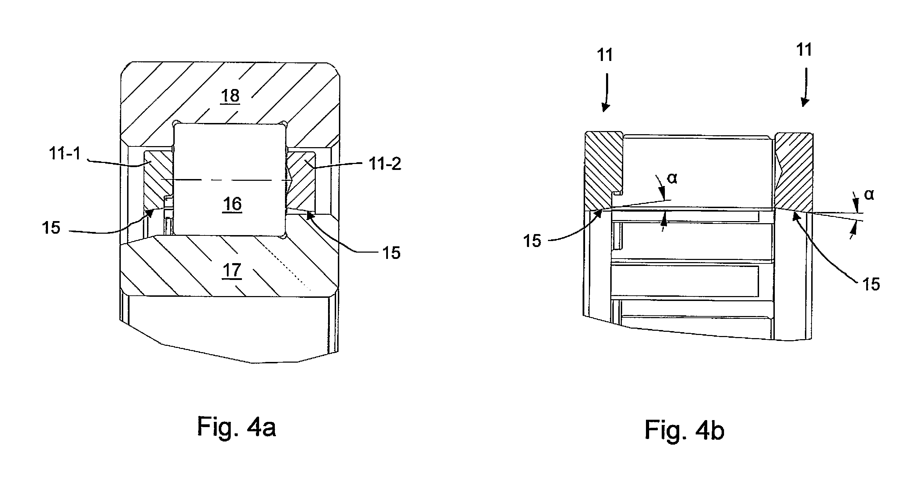

Die Fig. 4a zeigt ein abgedichtetes Wälzlager, in dem Rollen 16 mittels eines Lagerkäfigs 10 zwischen zwei Lagerringen 17, 18 gehalten werden. Durch die Verringerung der Rollenanzahl und die Verbreiterung der Käfigstege 13 gegenüber herkömmlichen Wälzlagern kann der freie Raum im Lager vergrößert und somit als zusätzliches Fettreservoir genutzt werden. Bei dem Wälzlager können 20% bis 40%, insbesondere 30%, des darin vorhandenen Freiraums mit Schmiermittel gefüllt werden.

Wie sich in Fig. 4a erkennen lässt, verlaufen die radial innenliegenden Oberflächen 15 der beiden Seitenringe 11-1 und 11-2 schräg, sodass der Innendurchmesser eines Seitenrings 11 an seinem axial äußeren Bereich kleiner ist, als sein Innendurchmesser an seinem axial inneren Bereich (in Richtung Wälzkörper). D.h., die innenliegenden Oberflächen 15 erstrecken sich schräg von axial außen nach axial innen von der Wälzkörperlauffläche weg. Obwohl die Figuren 4a und 4b beispielhaft Seitenringe 11 mit angeschrägten radial innenliegenden Oberflächen darstellen, sind selbstverständlich auch Ausführungsbeispiele denkbar, bei denen alternativ oder zusätzlich die radial außenliegende Oberfläche vergleichbar angeschrägt ist. Bei solchen Ausführungsbeispielen ist dann der Außendurchmesser eines Seitenrings 11 an seinem axial äußeren Bereich größer als sein Außendurchmesser an seinem axial inneren Bereich. D.h., die außenliegenden Oberflächen erstrecken sich schräg von axial außen nach axial innen zu der Wälzkörperlauffläche hin. Dadurch kann eine Fettverdrängung nach außen, d. h. vom Wälzkörper 16 wegwärts, erschwert werden und damit das Fett bei den Rollen 16 gehalten werden.

Wie es in der Fig. 4b dargestellt ist, können die schrägen bzw. kegeligen Oberflächen 15, d.h. die radialen Endflächen 15 des Seitenrings 11, mit der Rotationsachse des Lagerkäfigs beispielsweise einen Winkel α in einem Bereich von 3° bis 10° einschließen.

Die in der vorstehenden Beschreibung, den nachfolgenden Ansprüchen und in den Zeichnungen offenbarten Merkmale, können sowohl einzeln als auch in beliebiger Kombination für die Verwirklichung der Erfindung in ihren verschiedenen Ausgestaltungen bzw. Aspekten von Bedeutung sein.

Obwohl manche Aspekte der vorliegenden Erfindung im Zusammenhang mit einer Vorrichtung bzw. einem Lagerkäfig beschrieben wurden, versteht es sich, dass diese Aspekte auch eine Beschreibung eines entsprechenden Verfahrens, wie z. B. eines Herstellungsverfahrens, für den Lagerkäfig, darstellen, sodass ein Block oder ein Bauelement einer Vorrichtung auch als ein entsprechender Verfahrensschritt oder als ein Merkmal eines Verfahrensschritts zu verstehen ist. Analog dazu stellen Aspekte, die im Zusammenhang mit einem oder als ein Verfahrensschritt beschrieben wurden, auch eine Beschreibung eines entsprechenden Blocks oder Details bzw. Merkmals einer entsprechenden Vorrichtung dar.

### Bezugszeichenliste

- 10: Lagerkäfig gemäß einem Ausführungsbeispiel
- 11: Seitenring
- 12: Rollen- bzw. Wälzkörpertasche
- 13: Käfigsteg
- 14: Vertiefung an der Innenseite eines Käfigstegs
- 15: radial innenliegende Endfläche eines Seitenrings
- 16: Rolle
- 17: Lagerinnenring
- 18: Lageraußenring
- 20: Lagerteilkreis

## Patentansprüche

1. Lagerkäfig (10) zum Führen von Rollen (16) eines Wälzlagers, wobei in dem Lagerkäfig eine Mehrzahl von Wälzkörpertaschen (12) ausgebildet ist, wobei eine Wälzkörpertasche (12) eine Rolle (16) aufnehmen kann und durch zwei axial verlaufende Käfigstege (13) begrenzt wird,
**dadurch gekennzeichnet, dass**
ein Verhältnis zwischen einer Stärke (D₁₃) eines Käfigstegs (13) auf dem Lagerteilkreis (20) zum Durchmesser (D₁₂) einer Wälzkörpertasche (12) in einem Bereich zwischen 0.3 und 0.8 liegt.

2. Lagerkäfig (10) nach Anspruch 1, wobei wenigstens einer der Käfigstege (13) an seiner radial innen liegenden Oberfläche wenigstens eine Vertiefung (14) zum Aufnehmen von Schmiermittel aufweist.

3. Lagerkäfig (10) nach Anspruch 2, wobei die wenigstens eine Vertiefung (14) durch einen Rauheitswert der radial innen liegenden Oberfläche größer als 3.2 µm gebildet wird.

4. Lagerkäfig (10) nach Anspruch 2 oder 3, wobei die wenigstens eine Vertiefung (14) durch wenigstens eine an der radial innen liegenden Oberfläche in axialer Richtung verlaufende Rinne gebildet wird.

5. Lagerkäfig (10) nach einem der Ansprüche 2 bis 4, wobei sich die wenigstens eine Vertiefung (14) über 50 bis 90 % der Käfigstegbreite und/oder 80 bis 100% der Käfigsteglänge erstreckt.

6. Lagerkäfig (10) nach einem der vorhergehenden Ansprüche, wobei der Lagerkäfig zwei Seitenringe (11) aufweist, zwischen denen die Käfigstege (13) in axialer Richtung verlaufen, und wobei ein Innen-/Außendurchmesser eines Seitenrings an seinem axial äußeren Bereich kleiner/größer ist als sein Innen-/Außendurchmesser an seinem axial inneren Bereich.

7. Lagerkäfig (10) nach Anspruch 6, wobei eine sich dadurch ergebende radiale Endfläche (15) des Seitenrings (11) mit der Rotationsachse des Lagerkäfigs einen Winkel in einem Bereich von 3° bis 10° einschließt.

8. Abgedichtetes Wälzlager mit einem Lagerkäfig (10) nach einem der vorhergehenden Ansprüche.

9. Abgedichtetes Wälzlager nach Anspruch 8, wobei 20 % bis 40 % des darin vorhandenen Freiraums mit Schmiermittel gefüllt sind.

10. Verfahren zum Herstellen eines Lagerkäfigs (10) zum Führen von Rollen (16) eines Wälzlagers, mit folgenden Schritten:
Ausbilden, in dem Lagerkäfig (10), einer Mehrzahl von Wälzkörpertaschen (12), wobei eine Wälzkörpertasche (12) eine Rolle (16) aufnehmen kann und durch zwei axial verlaufende Käfigstege (13) begrenzt wird, und derart gebildet wird, dass ein Verhältnis zwischen einer Stärke (D₁₃) eines Käfigstegs (13) auf dem Lagerteilkreis (20) zum Durchmesser (D₁₂) einer Wälzkörpertasche (12) in einem Bereich zwischen 0.3 und 0.8 liegt.
